# FASCICULE DE BREVET EUROPEEN

(11) **EP 2 996 891 B1**
(45) Date de publication et mention de la délivrance du brevet: **29.04.2020**
(21) Numéro de dépôt: 14724340.6
(22) Date de dépôt: 29.04.2014
(51) Int. Cl.: B60J 5/04, B60N 2/75

(54) **MODULE DE PORTE DE VEHICULE AUTOMOBILE COMPRENANT UN ELEMENT DE SUPPORT DE POIGNEE DE PORTE**
KRAFTFAHRZEUGTÜRMODUL MIT EINEM TÜRGRIFFTRÄGERELEMENT
MOTOR VEHICLE DOOR MODULE COMPRISING A DOOR HANDLE SUPPORT ELEMENT

(30) Priorité: 17.05.2013 FR 1354457
(43) Date de publication de la demande: 23.03.2016
(73) Titulaire: PSA Automobiles SA, 78300 Poissy (FR); Faurecia Intérieur Industrie, 92000 Nanterre (FR)
(72) Inventeur: MESARIC, Stéphane, F-92350 Le Plessis Robinson (FR); DESRUS, Dany, F-92500 Rueil-Malmaison (FR); SCHMITT, Christophe, F-92735 Nanterre Cedex (FR); VASILESCU, Claudiu, F-75017 Paris (FR)
(74) Mandataire: Fernandez, Francis Lionel
(86) Numéro de dépôt international: PCT/EP2014/058757
(87) Numéro de publication internationale: WO 2014/183994

(56) Documents cités:
- EP-A2- 0 427 152
- EP-A2- 1 932 701
- WO-A1-2006/000082
- WO-A1-2008/138122
- DE-A1- 19 738 853
- US-A- 5 937 584

## Description

La présente invention concerne un module de porte de véhicule, du type réalisé d'une seule pièce, ledit module comprenant une face de support sensiblement plane.

L'invention concerne également une porte de véhicule comprenant un tel module de porte et un véhicule comprenant une telle porte.

Les modules de porte sont des pièces, par exemple en matière plastique, destinées à être montées sur la porte d'un véhicule automobile afin d'y regrouper certaines fonctions de la porte tout en allégeant celle-ci. Ces fonctions sont par exemple le système lève-vitre, la fixation d'une poignée intérieure, le support d'un haut-parleur, le maintien du câblage électrique, etc. De tels modules sont destinés à être recouverts par un panneau de garnissage, dit panneau de porte.

Le document EP-1 200 279 décrit un tel module de porte comprenant un support de réception d'une poignée intérieure de porte formé par un logement ou par des points de fixation de la poignée, la poignée étant rapportée sur le module de porte.

Le document EP1932701 décrit une porte de véhicule avec un module de porte pouvant servir de base de fixation à différents équipements et dont la conception augmente la rigidité de la porte.

Cependant, dans le cas d'une poignée, dite de tirage, sur laquelle un utilisateur exerce une force de traction importante pour rabattre la porte et la fermer, de tels support de réception ne sont pas satisfaisants car ils n'offrent pas une résistance suffisante à la force exercée sur la poignée de tirage, ce qui peut entraîner une déformation de la poignée de tirage lorsque l'on tire dessus et donne une impression de manque de robustesse à l'utilisateur.

Une solution pour pallier cet inconvénient consiste à prévoir un élément de support de poignée de tirage fixé sur la doublure métallique de la porte et à fixer le panneau de porte portant la poignée de tirage sur cet élément de support.

Cependant, une telle liaison entre le panneau de porte et la doublure de la porte dans une zone centrale de la porte est gênante car la doublure est ajourée afin de permettre le montage du système lève-vitre et éventuellement d'un haut-parleur, l'ajout d'un élément de support sur cette doublure nécessitant une architecture particulière de cette doublure et posant des problèmes d'ergonomie d'assemblage de la porte, notamment pour le montage du système lève-vitre. En outre, une telle structure alourdit la porte, car elle nécessite une doublure métallique comprenant plus de matière pour recevoir l'élément de support de la poignée de tirage. En outre, la force de traction exercée sur la poignée de tirage peut entraîner une déformation de la doublure métallique de la porte, ce qui peut nécessiter un renfort de cette doublure, augmentant ainsi encore la masse de la porte.

L'un des buts de l'invention est de pallier ces inconvénients en proposant un module de porte apte à recevoir une poignée de tirage de porte et présentant une robustesse suffisante pour éviter une déformation de cette poignée de tirage lorsqu'une force de traction est exercée sur celle-ci.

A cet effet, l'invention concerne un module de panneau de porte du type précité, comprenant en outre un élément de support de poignée de tirage de porte réalisé d'une seule pièce avec le module, ledit élément comprenant deux branches s'étendant en saillie de la face de support, lesdites branches étant reliées l'une à l'autre par un élément de tirage s'étendant sensiblement parallèlement à la face de support.

L'élément de support de poignée de tirage formé d'une seule pièce avec le module de porte permet d'offrir une résistance suffisante au module pour supporter une force de traction importante exercée sur une poignée de tirage montée sur l'élément de support. Ainsi, le module intègre la fonction de support de la poignée de tirage, ce qui ne nécessite pas de prévoir une doublure de porte particulière. La porte est ainsi plus légère tout en offrant une robustesse satisfaisante à un utilisateur.

Selon d'autres aspects du module de porte selon l'invention :
- les branches et l'élément de tirage sont chacun formés de deux flancs s'étendant sensiblement parallèlement l'un à l'autre et reliés l'un à l'autre par des nervures ;
- l'élément de support de poignée de tirage présente la forme d'un U, les extrémités des branches étant liées à la face de support ;
- chaque branche comprend une première extrémité liée et venue de matière avec la face de support et une deuxième extrémité liée à la deuxième extrémité de l'autre branche par un élément de tirage ;
- l'élément de tirage est venu de matière avec les branches ;
- l'élément de tirage comprend des moyens de fixation d'une poignée de tirage de porte de véhicule formée sur un panneau de garnissage, destinée à s'étendre sur l'élément de support et à revêtir ledit élément de support ;
- le module comprend un élément de fixation d'au moins un câble fonctionnel du véhicule, ledit élément de fixation étant formé sur un décrochement s'étendant en saillie de l'une des branches de l'élément de support de poignée de tirage de porte ;
- l'élément de tirage comprend des moyens de fixation d'une poignée de tirage de porte de véhicule, destinée à s'étendre sur l'élément de support ;
- le module comprend des moyens de renfort du module, lesdits moyens étant formés par une pluralité de nervures s'étendant en saillie de la face de support ;
- le module de porte est réalisé à partir d'une matière plastique unique injectée ; et
- la matière unique injectée est un matériau plastique à base de polypropylène renforcé par des fibres de verre.

L'invention concerne également une porte de véhicule comprenant une ouverture de réception d'un module de porte, un module de porte tel que décrit ci-dessus étant fixé dans ladite ouverture de réception.

L'invention concerne également un véhicule comprenant une porte telle que décrite ci-dessus.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un module de porte selon l'invention et,
- la Fig. 2 est une représentation schématique en perspective du module de porte de la Fig. 1 reçu dans une porte de véhicule automobile.

Dans la description, le terme « longitudinal » est défini par rapport aux plans parallèles au plan dans lequel s'étend la face de support du module de porte et le terme « transversal » est défini par rapport aux plans perpendiculaires aux plans longitudinaux.

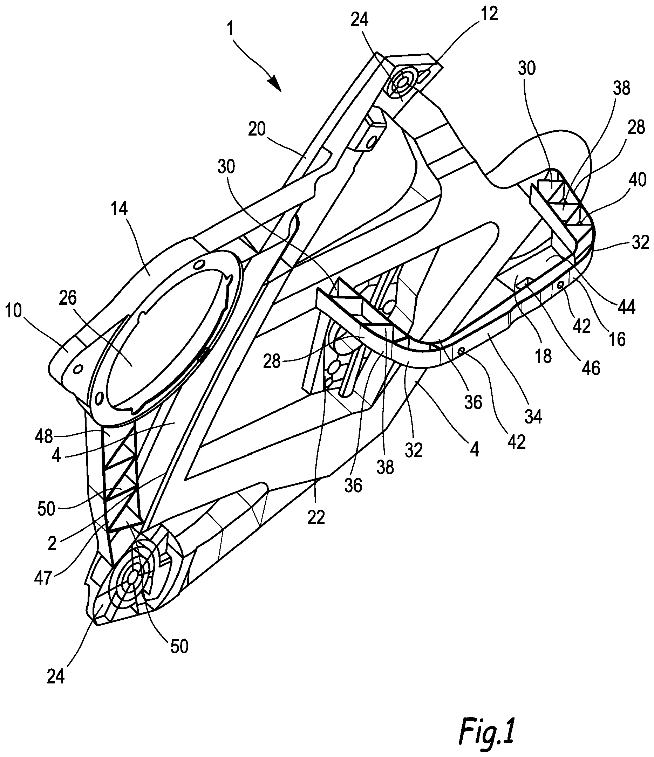

En référence à la Fig. 1, on décrit un module de porte 1 réalisé d'une seule pièce et à partir d'une matière plastique unique injectée. Par « réalisé d'une seule pièce », on entend que le module de porte 1 est monobloc, tous les éléments le constituant étant réalisés simultanément de façon continue en une même pièce. Par « à partir d'une matière plastique unique », on entend qu'un seul produit est utilisé pour réaliser l'injection du module de porte 1, même si ce produit est un mélange de plusieurs matériaux différents.

Ainsi le module de porte 1 selon l'invention est réalisé à partir d'une matière plastique. Le module de porte est par exemple réalisé à base de polypropylène renforcé par des fibres de verre. La matière employée est par exemple connue sous l'acronyme PP LGF pour « polypropylene long glass fibers », c'est-à-dire « polypropylène longues fibres de verre ».

Le module de porte comprend une face de support 2 sensiblement plane et s'étendant longitudinalement entre deux parties extrêmes latérales 4 formant les bords externes du module de porte 1 selon la largeur de celui-ci. La face de support 2 peut présenter des formes variées en fonction de l'architecture de la porte et du nombre de fonctions rapportées sur le module de porte 1.

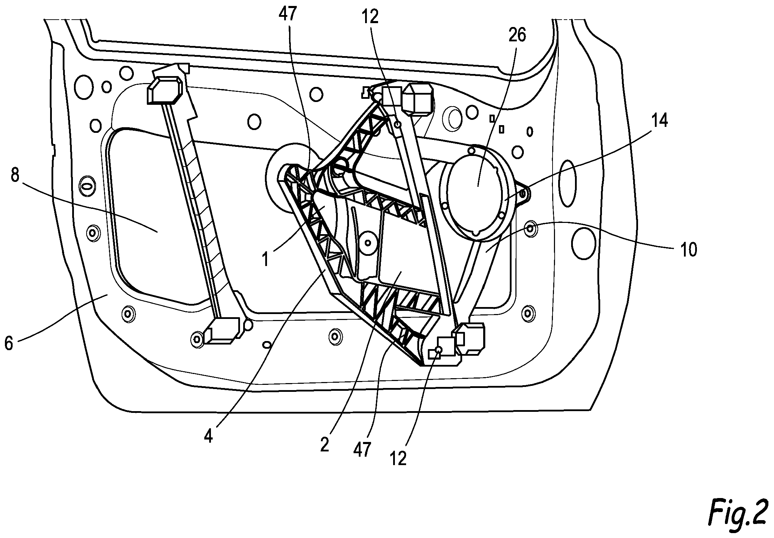

Comme représenté sur la Fig. 2, le module de porte 1 est fixé à une porte de véhicule automobile 6, en particulier dans une ouverture 8 de celle-ci. A cet effet, le module de porte 1 comprend des moyens de fixation à la porte, telle que des pattes de fixation 10 ou des fûts de vissage 12. Le module de porte est ensuite recouvert par un panneau de garnissage (non représenté), le panneau de garnissage étant fixé à la porte de véhicule automobile 6.

Outre ces moyens de fixation, le module de porte 1 permet de regrouper un grand nombre de fonctions de la porte en injectant d'une seule pièce des moyens permettant de réaliser ces fonctions au cours de l'injection du module de porte.

Ainsi le module de porte comprend par exemple une partie d'un système lève-vitre, un support de haut-parleur 14, un élément de support d'une poignée intérieure 16, décrit ultérieurement, au moins un moyen de réception 18 de câbles fonctionnels du véhicule automobile, tels que des câbles électriques. D'autres fonctions pourraient bien entendu être regroupées sur le module de porte, telles que des moyens de support d'un accoudoir, d'un vide-poche ou autre.

Le système lève-vitre formé en partie avec le module de porte 1 est par exemple un système à câbles ou à tubes Bowden. Dans un tel système, au moins un dispositif de support de vitre (non représenté) est actionné en translation le long d'au moins un rail de guidage 20 au moyen d'au moins un câble (non représenté) actionné par des moyens d'actionnement tels qu'un tambour (non représenté) actionné manuellement ou par un moteur (non représenté). Selon l'agencement du système lève-vitre, le ou les câbles peuvent passer autour d'une ou plusieurs poulies (non représentées) disposées de façon adéquate. Le déplacement en translation du dispositif de support permet de faire passer la vitre d'une position ouverte à une position fermée et inversement.

Le module de porte 1 comprend, intégrés d'une seule pièce avec la face de support 2, le rail de guidage 20 et des moyens de support 22 des moyens d'actionnement du système lève-vitre et éventuellement des moyens de support 24 des poulies. Des moyens de réception de câbles peuvent également être utilisés pour le passage des câbles d'actionnement du système lève-vitre.

Le support de haut-parleur 14 est par exemple formé par un orifice 26 formé dans la face de support 2 et comprenant des orifices ou fûts de fixation du haut-parleur comme représenté sur la Fig. 1 et/ou des moyens d'emboîtement du haut-parleur comme représenté sur la Fig. 2.

L'élément de support 16 s'étend sensiblement transversalement en saillie de la face de support 2, vers l'intérieur du véhicule lorsque le module 1 est monté sur une porte et est formé, comme mentionné précédemment, d'une seule pièce avec cette face de support 2. L'élément de support 16 est plus particulièrement destiné à former le support d'une poignée de tirage de la porte du véhicule, par exemple formée par le panneau de garnissage destiné à revêtir la porte et actionnée lorsque la porte est fermée depuis l'intérieur du véhicule.

L'élément de support 16 comprend deux branches 28 s'étendant sensiblement perpendiculairement à la face de support 2, parallèlement l'une à l'autre, ou légèrement convergente l'une vers l'autre, et espacées l'une de l'autre. Chaque branche 28 comprend une première extrémité 30 liée et venue de matière avec la face de support 2 et une deuxième extrémité 32 liée à la deuxième extrémité de l'autre branche 28 par un élément de tirage 34. L'élément de tirage 34 est venu de matière avec les branches 28 et s'étend sensiblement parallèlement à la face de support 2 et à distance de celle-ci. La jonction entre les deuxièmes extrémités 32 des branches 28 et les extrémités de l'élément de tirage 34 est par exemple de forme arrondie. Le module de porte 1, l'élément de support 16, les branches 28 et l'élément de tirage 34 sont une seule et même pièce venue de matière.

Ainsi, l'élément de support 16 présente sensiblement la forme d'un U dont les extrémités des branches sont liées à la face de support 2, comme représenté sur la Fig. 1. La forme en U de l'élément de support 16 laisse un espace libre entre la face de support 2 et l'élément de tirage 34, ce qui permet de laisser un volume pour l'installation d'éléments électriques, prévus sous et au voisinage de la poignée de tirage recouvrant l'élément de support 16, tels que les interrupteurs d'actionnement de la vitre ou d'autres fonctions du véhicule.

Les branches 28 et l'élément de tirage 34 sont formés chacun par deux flancs 36 s'étendant sensiblement parallèlement l'un à l'autre, l'un s'étendant du côté intérieur du U et l'autre s'étendant du côté extérieur du U, et reliés l'un à l'autre par une pluralité de nervures 38 venues de matière à leurs extrémités avec l'un des flancs 36, comme représenté sur la Fig. 1. Les nervures 38 s'étendent sensiblement verticalement lorsque le module de porte 1 est monté sur une porte 10 et sont par exemple agencées de sorte à former des cellules 40 de section horizontale sensiblement triangulaire entre les flancs 36.

Une telle structure d'élément de support de poignée de tirage de porte permet de conférer à cet élément une grande robustesse et le rend apte à résister, sans déformation, à une traction selon la direction transversale supérieure à 80 N, ce qui permet de résister à l'effort exercé par un utilisateur pour fermer la porte d'un véhicule depuis l'intérieur de celui-ci en tirant sur la poignée de tirage.

Afin d'augmenter encore cette résistance, le module de porte 1 est fixé d'un côté de l'ouverture 8 prévue dans la porte 6, et par exemple formée sur une doublure métallique de porte, tandis que l'élément de support 16 s'étend en saillie de l'autre côté de cette ouverture 8, comme représenté sur la Fig. 2. De la sorte, lorsqu'une traction est exercée sur l'élément de support 16, une partie de la force s'exerce sur la doublure métallique de la porte.

L'élément de tirage 34 comprend des moyens de fixation d'une poignée de tirage de porte de véhicule (non représentée), destinée à s'étendre sur l'élément de support 16 et à revêtir celui-ci. Une telle poignée de tirage est par exemple formée sur un panneau de garnissage destiné à recouvrir la porte et à masquer le module de porte 1. Les moyens de fixation sont par exemple formés par des orifices 42 ou fûts de vissage s'étendant sur le flanc 36 extérieur du U de l'élément de tirage 34.

Une plaque 44 de réception temporaire de câbles fonctionnels du véhicule peut en outre être prévue sur l'élément de support 16. Une telle plaque 44 forme par exemple un décrochement s'étendant en saillie de l'une des branches 28 de l'élément de support 16 et comprend un élément de fixation 46 du ou des câbles, par exemple formé par des moyens de réception d'une agrafe de câble, comme représenté sur la Fig. 1. Une telle plaque 44 permet de maintenir un faisceau de câbles fonctionnels du véhicule lors du montage de la porte et améliore l'ergonomie de ce montage, ce qui permet d'augmenter la cadence de montage.

Le module de porte comprend en outre des moyens de renfort 47 du module afin de lui conférer la rigidité requise. Ces moyens de renfort 47 sont formés par une pluralité de nervures 48 saillant sensiblement transversalement d'un côté de la face de support 2, par exemple le même côté que celui à partir duquel s'étend l'élément de support 16 de poignée de tirage de porte. Les nervures 48 sont réparties de façon optimale pour garantir la rigidité souhaitée et forment par exemple des cellules 50 de section verticale triangulaire, rectangulaire ou trapézoïdale, comme représenté sur la Fig. 1. Ainsi, les nervures 48 sont orientées différemment des nervures 38 prévues sur l'élément de support 16. De telles nervures 48 permettent d'augmenter de façon simple la rigidité du module de porte 1 sans ajouter un poids conséquent à celui-ci.

Des encoches peuvent être prévues dans les nervures 48 afin de former des moyens de réception de câbles fonctionnels et peuvent définir entre elles un chemin de câbles permettant d'orienter et de répartir les câbles de façon optimale.

Le module de porte décrit ci-dessus est réalisé par injection dans une cavité de moulage définie par deux parties d'un moule lorsqu'elles sont rapprochées l'une de l'autre. Bien entendu cette géométrie de module de porte avec des portions s'étendant dans des plans sensiblement perpendiculaires et avec des ouvertures nécessite des cavités de moulage complexes avec l'utilisation de tiroirs afin de réaliser le module d'une seule pièce. Le spécialiste du moulage par injection aurait un a priori contre cette solution et choisirait plutôt de réaliser le module en plusieurs pièces assemblées les unes aux autres. Mais avantageusement, seul un tiroir est nécessaire pour démouler l'élément de support 16 de poignée de tirage de porte. Le démoulage reste toutefois assez simple et peu coûteux du fait de l'orientation optimale des nervures 38 de l'élément de support 16, qui ne complique pas la structure du tiroir permettant de démouler l'élément de support.

Le module de porte décrit ci-dessus est donc particulièrement simple et économique à réaliser, tout en offrant une robustesse suffisante pour remplir la fonction de support de poignée de tirage de la porte et en permettant de réduire la masse générale de la porte de véhicule automobile. Le module 1 permet de ne pas avoir à modifier la doublure métallique de porte et notamment de ne pas avoir à ajouter de la matière sur celle-ci pour permettre la fixation d'un élément de support de poignée de tirage.

Le module de porte permet en outre de regrouper un grand nombre de fonction de la porte de véhicule, de façon simple et modulable, en modifiant simplement la forme de la cavité d'injection.

## Revendications

1. Module de porte (1) de véhicule réalisé d'une seule pièce, ledit module comprenant une face de support (2) sensiblement plane, ledit module étant destiné à être recouvert par un panneau de garnissage, **caractérisé en ce qu'**il comprend en outre un élément de support (16) de poignée de tirage de porte réalisé d'une seule pièce avec le module, ledit élément (16) comprenant deux branches (28) s'étendant en saillie de la face de support (2), lesdites branches (28) étant reliées l'une à l'autre par un élément de tirage (34) s'étendant sensiblement parallèlement à la face de support (2).

2. Module de porte de véhicule selon la revendication 1, **caractérisé en ce que** les branches (28) et l'élément de tirage (34) sont chacun formés de deux flancs (36) s'étendant sensiblement parallèlement l'un à l'autre et reliés l'un à l'autre par des nervures (38).

3. Module de porte de véhicule selon l'une quelconque des revendications 1 à 2, **caractérisé en ce que** l'élément de support (16) de poignée de tirage présente la forme d'un U, les extrémités (30) des branches (28) étant liées à la face de support (2).

4. Module de porte de véhicule selon l'une quelconque des revendications 1 à 3, **caractérisé en ce que** chaque branche (28) comprend une première extrémité (30) liée et venue de matière avec la face de support (2) et une deuxième extrémité (32) liée à la deuxième extrémité de l'autre branche (28) par un élément de tirage (34).

5. Module de porte de véhicule selon l'une quelconque des revendications 1 à 4, **caractérisé en ce que** l'élément de tirage (34) est venu de matière avec les branches (28).

6. Module de porte de véhicule selon l'une quelconque des revendications 1 à 5, **caractérisé en ce que** l'élément de tirage (34) comprend des moyens de fixation d'une poignée de tirage de porte de véhicule formée sur un panneau de garnissage, destinée à s'étendre sur l'élément de support (16) et à revêtir ledit élément de support (16).

7. Module de porte de véhicule selon l'une quelconque des revendications 1 à 6, **caractérisé en ce qu'**il comprend un élément de fixation (46) d'au moins un câble fonctionnel du véhicule, ledit élément de fixation (46) étant formé sur un décrochement s'étendant en saillie de l'une des branches (28) de l'élément de support (16) de poignée de tirage de porte.

8. Module de porte de véhicule selon l'une quelconque des revendications 1 à 7, **caractérisé en ce que** l'élément de tirage (34) comprend des moyens de fixation d'une poignée de tirage de porte de véhicule, destinée à s'étendre sur l'élément de support (16).

9. Module de porte de véhicule selon l'une quelconque des revendications 1 à 8, **caractérisé en ce qu'**il comprend des moyens de renfort du module, lesdits moyens étant formés par une pluralité de nervures (48) s'étendant en saillie de la face de support (2).

10. Module de porte de véhicule selon l'une quelconque des revendications 1 à 9, **caractérisé en ce que** le module de porte est réalisé à partir d'une matière plastique unique injectée.

11. Module de porte de véhicule selon la revendication 10, **caractérisé en ce que** la matière unique injectée est un matériau plastique à base de polypropylène renforcé par des fibres de verre.

12. Porte de véhicule comprenant une ouverture de réception (8) d'un module de porte (1), un module de porte selon l'une quelconque des revendications 1 à 11 étant fixé dans ladite ouverture de réception (8).

13. Véhicule comprenant une porte de véhicule selon la revendication 12.

## Patentansprüche

1. Fahrzeugtürmodul (1), das aus einem einzigen Stück hergestellt ist, wobei das Modul eine Tragfläche (2), die im Wesentlichen eben ist, umfasst, wobei das Modul dazu bestimmt ist, von einer Verkleidungsplatte abgedeckt zu sein, **dadurch gekennzeichnet, dass** es außerdem ein Tragelement (16) eines Türzuggriffs umfasst, das aus einem einzigen Stück mit dem Modul hergestellt ist, wobei das Element (16) zwei Schenkel (28) umfasst, die sich von der Tragfläche (2) vorragend erstrecken, wobei die Schenkel (28) miteinander durch ein Zugelement (34), das sich im Wesentlichen parallel zu der Tragfläche (2) erstreckt, verbunden sind.

2. Fahrzeugtürmodul nach Anspruch 1, **dadurch gekennzeichnet, dass** die Schenkel (28) und das Zugelement (34) jeweils aus zwei Seitenteilen (36) gebildet sind, die sich im Wesentlichen parallel zueinander erstrecken, und die miteinander durch Rippen (38) verbunden sind.

3. Fahrzeugtürmodul nach einem der Ansprüche 1 bis 2, **dadurch gekennzeichnet, dass** das Türzuggriff-Tragelement (16) die Form eines U aufweist, wobei die Enden (30) der Schenkel (28) mit der Tragfläche (2) verbunden sind.

4. Fahrzeugtürmodul nach einem der Ansprüche 1 bis 3, **dadurch gekennzeichnet, dass** jeder Schenkel (28) ein erstes Ende (30) umfasst, dass mit der Tragfläche (2) verbunden und aus einem Stück hergestellt ist, und ein zweites Ende (32), das mit dem zweiten Ende des anderen Schenkels (28) durch ein Zugelement (34) verbunden ist.

5. Fahrzeugtürmodul nach einem der Ansprüche 1 bis 4, **dadurch gekennzeichnet, dass** das Zugelement (34) aus einem Stück mit den Schenkeln (28) besteht.

6. Fahrzeugtürmodul nach einem der Ansprüche 1 bis 5, **dadurch gekennzeichnet, dass** das Zugelement (34) Befestigungsmittel eines Türzuggriffs umfasst, der auf einer Verkleidungsplatte gebildet ist, der dazu bestimmt ist, sich auf dem Tragelement (16) zu erstrecken und das Tragelement (16) zu verkleiden.

7. Fahrzeugtürmodul nach einem der Ansprüche 1 bis 6, **dadurch gekennzeichnet, dass** es ein Befestigungselement (46) mindestens eines Funktionskabels des Fahrzeugs umfasst, wobei das Befestigungselement (46) auf einem Absatz gebildet ist, der sich von einem der Schenkel (28) des Türzuggriff-Tragelements (16) vorragend erstreckt.

8. Fahrzeugtürmodul nach einem der Ansprüche 1 bis 7, **dadurch gekennzeichnet, dass** das Zugelement (34) Mittel zum Befestigen eines Fahrzeug-Türzuggriffs umfasst, der dazu bestimmt ist, sich auf dem Tragelement (16) zu erstrecken.

9. Fahrzeugtürmodul nach einem der Ansprüche 1 bis 8, **dadurch gekennzeichnet, dass** es Mittel zum Verstärken des Moduls umfasst, wobei die Mittel aus einer Vielzahl von Rippen (48), die sich von der Tragfläche (2) vorragend erstreckt, gebildet sind.

10. Fahrzeugtürmodul nach einem der Ansprüche 1 bis 9, **dadurch gekennzeichnet, dass** das Türmodul ausgehend von einem einzigen Spritzgusskunststoff hergestellt ist.

11. Fahrzeugtürmodul nach Anspruch 10, **dadurch gekennzeichnet, dass** das einzige Spritzgussmaterial auf glasfaserverstärktem Polypropylen basiert.

12. Fahrzeugtür, die eine Aufnahmeöffnung (8) eines Türmoduls (1) umfasst, wobei ein Türmodul nach einem der Ansprüche 1 bis 11 in der Aufnahmeöffnung (8) befestigt ist.

13. Fahrzeug, das eine Fahrzeugtür nach Anspruch 12 umfasst.

## Claims

1. A vehicle door module (1) made as a single piece, said module including a substantially planar support face (2), said module being intended to be covered by a trim panel, **characterized in that** it further includes a support element (16) of a door pull-handle, made in a single piece with the module, said element (16) including two branches (28) extending in a projecting manner from the support face (2), said branches (28) being connected to one another by a pull element (34) extending substantially parallel to the support face (2) .

2. The vehicle door module according to Claim 1, **characterized in that** the branches (28) and the pull element (34) are each formed by two flanks (36) extending substantially parallel to one another and connected to one another by ribs (38).

3. The vehicle door module according to any one of Claims 1 to 2, **characterized in that** the support element (16) of the door pull-handle has a U-shape, the ends (30) of the branches (28) being linked to the support face (2) .

4. The vehicle door module according to any one of Claims 1 to 3, **characterized in that** each branch (28) includes a first end (30) linked to and formed as an integral part with the support face (2), and a second end (32) linked to the second end of the other branch (28) by a pull element (34).

5. The vehicle door module according to any one of Claims 1 to 4, **characterized in that** the pull element (34) is formed as an integral part with the branches (28).

6. The vehicle door module according to any one of Claims 1 to 5, **characterized in that** the pull element (34) includes attachment means of a vehicle door pull-handle formed on a trim panel, intended to extend over the support element (16) and to cover said support element (16).

7. The vehicle door module according to any one of Claims 1 to 6, **characterized in that** it includes an attachment element (46) of at least one functional cable of the vehicle, said attachment element (46) being formed on a step extending in a projecting manner from one of the branches (28) of the support (16) of the door pull-handle.

8. The vehicle door module according to any one of Claims 1 to 7, **characterized in that** the pull element (34) includes attachment means of a vehicle door pull-handle, intended to extend over the support element (16) .

9. The vehicle door module according to any one of Claims 1 to 8, **characterized in that** it includes reinforcement means of the module, said means being formed by a plurality of ribs (48) extending in a projecting manner from the support face (2).

10. The vehicle door module according to any one of Claims 1 to 9, **characterized in that** the door module is made from a single injected plastic material.

11. The vehicle door module according to Claim 10, **characterized in that** the single injected material is a plastic material based on polypropylene reinforced by glass fibres.

12. A vehicle door including a reception opening (8) of a door module (1), a door module according to any one of Claims 1 to 11 being attached in said reception opening (8).

13. A vehicle including a vehicle door according to Claim 12.
